# FASCICULE DE BREVET EUROPEEN

(11) **EP 2 895 940 B1**
(45) Date de publication et mention de la délivrance du brevet: **02.11.2016**
(21) Numéro de dépôt: 13776531.9
(22) Date de dépôt: 12.09.2013
(51) Int. Cl.: G06F 3/041, G06F 3/043

(54) **SYSTEME ET PROCEDE DE DETECTION ET DE LOCALISATION D'AU MOINS UN TOUCHER SUR UNE SURFACE TACTILE D'UN OBJET**
SYSTEM UND VERFAHREN ZUM ERFASSEN MINDESTENS EINER BERÜHRUNG AUF EINER BERÜHRUNGSEMPFINDLICHEN OBERFLÄCHE EINES OBJEKTS
SYSTEM AND METHOD FOR DETECTING AT LEAST ONE TOUCH ON A TOUCH-SENSITIVE SURFACE OF AN OBJECT

(30) Priorité: 14.09.2012 FR 1258664
(43) Date de publication de la demande: 22.07.2015
(73) Titulaire: Commissariat à l'Énergie Atomique et aux Énergies Alternatives, 75015 Paris (FR); Renault s.a.s., 92100 Boulogne-Billancourt (FR)
(72) Inventeur: CHALUBERT, Gérard, F-78960 Voisins Le Bretonneux (FR); NIKOLOVSKI, Jean-Pierre, 13620 Carry-le-Rouet (FR); GUENARD, Nicolas, F-91191 Gif-sur-Yvette Cedex (FR); BRELAUD, Olivier, F-78650 Saulx-Marchais (FR)
(74) Mandataire: Bonnet, Michel
(86) Numéro de dépôt international: PCT/FR2013/052095
(87) Numéro de publication internationale: WO 2014/041306

(56) Documents cités:
- FR-A1- 2 948 471
- US-A- 6 100 877

## Description

La présente invention concerne un système de détection et de localisation d'au moins un toucher sur une surface tactile d'un objet. Elle concerne également un procédé mis en oeuvre par ce système.

Il est connu de l'état de la technique différents systèmes de détection et de localisation de touchers sur une surface tactile, comportant des moyens d'émission d'ondes acoustiques de volume dans la surface tactile, des moyens de réception des ondes acoustiques de volume après leur propagation dans la surface tactile, conçus pour fournir un signal de réception à partir des ondes acoustiques reçues, et des moyens de détection et de localisation d'un toucher sur la surface tactile à partir du signal de réception.

Le brevet publié sous le numéro US 6,741,237 décrit un système utilisant la perturbation d'un temps de transit d'ondes acoustiques sismiques se propageant dans un objet, par exemple un écran tactile, entre un transducteur émetteur et au moins deux transducteurs récepteurs disposés autour de l'objet de façon à ce que cette perturbation engendre des fluctuations différentes des temps de transit depuis la zone de perturbation vers les deux transducteurs récepteurs. Ce système est uniquement basé sur des différences de temps de transit et nécessite de disposer les transducteurs en des endroits précis autour de l'objet pour maximiser les différentiels de temps de transit selon au moins deux directions distinctes, par exemple dans les coins pour une plaque rectangulaire d'écran tactile. En outre il permet de détecter une perturbation de type toucher ponctuel, mais pas de la caractériser davantage.

Pour améliorer la sensibilité du système, il est connu de proposer des solutions basées sur une analyse spectrale du signal de réception. L'invention s'applique ainsi plus particulièrement à un système de détection et de localisation d'au moins un toucher sur une surface tactile d'un objet, comportant :
- au moins deux sources distinctes d'émission d'ondes acoustiques de volume dans la surface tactile, disposées de manière à engendrer des interférences acoustiques entre les ondes émises,
- au moins un récepteur des ondes acoustiques de volume après leur propagation et leur interférence dans la surface tactile, conçu pour fournir un signal de réception à partir des ondes acoustiques reçues, et
- des moyens de localisation d'au moins un toucher sur la surface tactile de l'objet par comparaison de certaines caractéristiques spectrales du signal de réception à un ensemble de caractéristiques spectrales de référence.

Par exemple, le brevet publié sous le numéro FR 2 916 545 décrit un système utilisant une reconnaissance de signature d'absorption relative d'une onde acoustique sismique sur un ensemble de figures de résonance de l'interface tactile. L'amortissement et le déphasage relatifs pour chaque fréquence induits par un toucher constituent une des composantes fréquentielles d'un vecteur d'amortissement relatif construit sur un nombre prédéfini de figures de résonance. Grâce à ce système, il est possible de détecter et localiser précisément une interaction sur une surface quelconque à l'aide d'un nombre réduit de transducteurs, selon une cadence de mesures pouvant atteindre cinquante localisations par seconde. Néanmoins, ce système présente l'inconvénient d'être sensible aux variations de températures, celles-ci agissant sur la signature d'absorption. Or, pour certaines applications envisageables, telles que celles du domaine automobile, l'interface tactile est destinée à être disposée dans un environnement susceptible de subir de fortes variations de températures, par exemple l'habitacle d'un véhicule.

Une amélioration de ce système est proposée dans la demande de brevet français publiée sous le numéro FR 2 948 471 dans laquelle ce ne sont plus des figures de résonance mais des figures transitoires de rayonnement, habituellement qualifiées de « figures impulsionnelles de diffraction », qui sont exploitées. Ainsi le procédé de localisation mis en oeuvre n'est pas dépendant des fréquences propres de l'objet et est par ailleurs capable de détecter des touchers multiples. Mais là encore, le système de détection reste sensible aux variations de températures, celles-ci agissant sur les figures impulsionnelles de diffraction.

Il peut ainsi être souhaité de prévoir un système de détection et de localisation de toucher qui permette de s'affranchir d'au moins une partie des problèmes et contraintes précités, en particulier qui soit moins sensible aux écarts de températures.

Il est donc proposé un système de détection et de localisation d'au moins un toucher sur une surface tactile d'un objet, comportant :
- au moins deux sources distinctes d'émission d'ondes acoustiques de volume dans la surface tactile, disposées de manière à engendrer des interférences acoustiques entre les ondes émises,
- au moins un récepteur des ondes acoustiques de volume après leur propagation et leur interférence dans la surface tactile, conçu pour fournir un signal de réception à partir des ondes acoustiques reçues,
- des moyens de localisation d'au moins un toucher sur la surface tactile de l'objet par comparaison de certaines caractéristiques spectrales du signal de réception à un ensemble de caractéristiques spectrales de référence, comportant en outre :
- des moyens de mesure d'une température de la surface tactile, et
- des moyens d'adaptation des caractéristiques spectrales du signal de réception ou des caractéristiques spectrales de référence par décalage fréquentiel d'au moins une partie de ces caractéristiques spectrales en fonction de la température mesurée.

Ainsi, en adaptant soit les caractéristiques spectrales de référence, soit les caractéristiques spectrales du signal de réception, à la température mesurée de l'interface tactile, il devient possible de conserver la fiabilité d'une localisation par comparaison de ces caractéristiques spectrales sur une large plage de températures alors même que les caractéristiques spectrales de référence ont été établies ou apprises à une température précise. L'adaptation peut en outre se faire très simplement par décalage fréquentiel : il a en effet été remarqué que l'influence de la température sur les caractéristiques spectrales à comparer réside essentiellement sur leur décalage pour un mode de propagation donné. Il en résulte une meilleure tenue en température du système de détection et de localisation.

De façon optionnelle les moyens d'adaptation sont conçus pour décaler chaque caractéristique spectrale du signal de réception en fonction de la température mesurée, à partir d'une correspondance préétablie et enregistrée en mémoire, pour un ensemble de températures prédéterminées, entre plusieurs fréquences ou bandes de fréquences successives et plusieurs valeurs de décalage fréquentiel associées respectivement à ces fréquences ou bandes de fréquences successives.

De façon optionnelle également, les moyens de mesure de température comportent :
- un calculateur de norme du spectre du signal de réception dans une bande de fréquences prédéterminée,
- un comparateur de cette norme calculée à un ensemble de normes de référence associées respectivement à un ensemble de températures,
- un sélecteur de température en fonction du résultat fourni par le comparateur.

De façon optionnelle également, les sources d'émission et le récepteur sont disposés de manière asymétrique en périphérie de la surface tactile et l'excitation des sources d'émission est établie de manière que la relation entre l'ensemble de normes de référence et l'ensemble de températures soit une relation monotone croissante ou décroissante.

De façon optionnelle également, les moyens de mesure de température comportent un capteur de température, notamment une thermistance, disposé au contact de la surface tactile.

De façon optionnelle également, les ondes acoustiques de volume se propageant dans la surface tactile sous forme d'ondes de Lamb, deux récepteurs sont disposés en vis-à-vis contre la surface tactile, ces récepteurs étant polarisés et connectés entre eux de manière à ne recevoir essentiellement que le mode fondamental antisymétrique de propagation des ondes de Lamb et à rejeter les ondes symétriques et les ondes transverses horizontales.

De façon optionnelle également, les deux récepteurs sont disposés de manière à présenter des polarisations orientées symétriquement par rapport au plan médian de la surface tactile et sont connectés électriquement en série entre eux.

Il est également proposé un procédé de détection et de localisation d'au moins un toucher sur une surface tactile d'un objet, comportant :
- l'émission dans la surface tactile, par au moins deux sources distinctes, d'ondes acoustiques de volume interférant entre elles,
- la réception, par au moins un récepteur, des ondes acoustiques de volume après leur propagation et leur interférence dans la surface tactile, et la fourniture d'un signal de réception à partir des ondes acoustiques reçues,
- la localisation d'au moins un toucher sur la surface tactile de l'objet par comparaison de certaines caractéristiques spectrales du signal de réception à un ensemble de caractéristiques spectrales de référence enregistrées en mémoire,
et comportant en outre :
- la mesure d'une température de la surface tactile, et
- l'adaptation des caractéristiques spectrales du signal de réception ou des caractéristiques spectrales de référence par décalage fréquentiel d'au

moins une partie de ces caractéristiques spectrales en fonction de la température mesurée.

De façon optionnelle :
- chaque caractéristique spectrale du signal de réception est décalée en fonction de la température mesurée, à partir d'une correspondance préétablie, pour un ensemble de températures prédéterminées, entre plusieurs fréquences ou bandes de fréquences successives et plusieurs valeurs de décalage fréquentiel associées respectivement à ces fréquences ou bandes de fréquences successives, et
- ces valeurs de décalage fréquentiel sont apprises lors d'une phase préalable d'apprentissage par appariement de caractéristiques spectrales extraites à vide à différentes températures avec des caractéristiques spectrales extraites à vide à la température d'apprentissage des caractéristiques spectrales de référence.

De façon optionnelle également, l'émission des ondes acoustiques de volume se fait sous la forme d'émissions successives de trains d'ondes impulsionnelles à différentes fréquences entre une fréquence minimale et une fréquence maximale commune aux trains d'ondes, et :
- la fréquence minimale est supérieure au tiers de la fréquence maximale,
- chaque train d'ondes à partir du deuxième diffère du précédent par un décalage fréquentiel de ses ondes impulsionnelles d'une fraction de l'écart fréquentiel moyen entre les ondes impulsionnelles.

L'invention sera mieux comprise à l'aide de la description qui va suivre, donnée uniquement à titre d'exemple et faite en se référant aux dessins annexés dans lesquels :
- la figure 1 représente schématiquement en perspective un système de détection et de localisation d'au moins un toucher sur une surface tactile d'un objet, selon un premier mode de réalisation de l'invention,
- la figure 2 représente schématiquement en vue de face un système de détection et de localisation d'au moins un toucher sur une surface tactile d'un objet, selon un second mode de réalisation de l'invention,
- la figure 3 illustre en vue de dessus un exemple de disposition de transducteurs contre une surface tactile d'un système de détection et de localisation selon l'invention,
- la figure 4 illustre une vue latérale de la surface tactile de la figure 3, connectée à une unité centrale électronique de commande du système de la figure 1 ou 2,
- la figure 5 illustre les étapes successives d'un procédé de détection et de localisation d'au moins un toucher sur une surface tactile d'un objet, selon un mode de réalisation de l'invention, et
- la figure 6 illustre les étapes successives d'une phase d'apprentissage préalable à l'exécution du procédé de la figure 5.

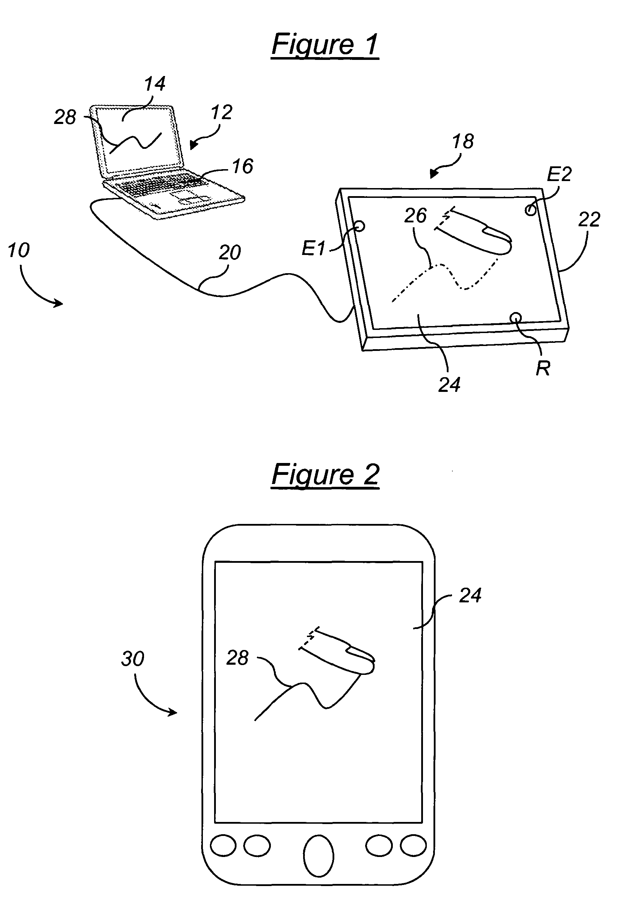

Le système 10 de détection et de localisation d'au moins un toucher sur une surface tactile d'un objet, représenté sur la figure 1, comporte un micro-ordinateur 12 comprenant notamment un écran 14 et un clavier 16, ainsi qu'un objet 18 de type tablette interactive, relié au micro-ordinateur 12 par une liaison 20, filaire ou radio.

La tablette interactive 18 comporte un châssis 22 et une surface tactile 24 maintenue par le châssis sur au moins une partie de ses bords. La surface tactile 24 se présente par exemple sous la forme d'une plaque de métal, de verre ou de plastique, vibrant lorsque des ondes mécaniques élastiques, ou ondes acoustiques de volume, se propagent dans son épaisseur. Elle peut être de forme rectangulaire, notamment au format 4/3. Concrètement, elle peut présenter une longueur de 100 mm, une largeur de 75 mm et une épaisseur relativement faible par rapport à sa longueur et sa largeur, notamment comprise entre 100 µm et 4 mm, par exemple 450 µm. Cette épaisseur est également très faible devant la dimension caractéristique d'une zone de la surface tactile 24 susceptible d'être touchée, un doigt d'utilisateur représentant généralement un toucher de diamètre proche du centimètre.

Dans l'exemple illustré sur la figure 1, trois transducteurs piézoélectriques E1, E2 et R sont fixés contre la face intérieure de la plaque tactile 24, c'est-à-dire celle qui est non accessible au toucher et orientée vers l'intérieur du châssis 22. Ils peuvent en particulier être collés sur la plaque 24, au moyen d'une colle époxy conductrice ou cyanoacrylate.

Ces transducteurs piézoélectriques sont par exemple des transducteurs en céramique ferroélectrique de type PZT (Zirconate Titanate de Plomb), dans lesquels la céramique est nue ou laminée sur un disque en laiton. Ils comportent :
- deux transducteurs d'émission E1 et E2 distincts aptes à émettre des ondes mécaniques élastiques (i.e. des ondes acoustiques de volume au sens large) en modes de flexion, comme par exemple des ondes de Lamb antisymétriques, de telle sorte qu'elles se propagent et interfèrent acoustiquement dans la plaque tactile 24,
- un transducteur de réception R apte à capter des ondes mécaniques élastiques, ou ondes acoustiques de volume, après leur propagation en modes de flexion et leur interférence dans la plaque tactile 24.

Ces trois transducteurs sont de préférence disposés en dehors de tout axe de symétrie de la plaque tactile 24. Par ailleurs, ils peuvent être de petite taille et de forme géométrique quelconque. En particulier, pour une plaque tactile 24 aux dimensions précitées (75 mm × 100 mm × 0,45 mm), ils peuvent présenter une surface comprise entre quelques millimètres carrés et un centimètre carré. Si les transducteurs d'émission E1 et E2 sont excités par des signaux de 10 V, le signal de réception fourni par le transducteur de réception R peuvent atteindre 0,2 V sans amplification.

Les transducteurs E1, E2 et R sont reliés à une unité centrale électronique de commande, par exemple intégrée au micro-ordinateur 12 et programmée pour :
- faire propager et interférer dans la plaque tactile 24 des ondes acoustiques de volume à partir des transducteurs piézoélectriques E1 et E2 et faire détecter ces ondes acoustiques par le transducteur piézoélectrique R pour obtenir un signal de réception, et
- localiser au moins un toucher sur la plaque tactile 24 par comparaison de certaines caractéristiques spectrales du signal de réception à un ensemble de caractéristiques spectrales de référence, ces caractéristiques spectrales de référence ayant été apprises lors d'une phase préalable de calibrage à une température donnée de la plaque tactile 24.

Les ondes acoustiques de volume émises dans la plaque tactile 24 à partir des transducteurs piézoélectriques E1 et E2 sont en effet localement absorbées, bloquées ou partiellement réfléchies lorsqu'au moins un doigt ou un stylet est en contact avec la plaque. Cela engendre une perturbation de l'information d'illumination ou de rayonnement fournie au point de réception R. En extrayant certaines caractéristiques spectrales, par exemple des paramètres d'amplitude et/ou de phase spectrales, à des fréquences prédéterminées de cette information d'illumination ou de rayonnement perturbée, il est possible de les comparer à des caractéristiques spectrales de référence extraites d'une bibliothèque de paramètres liés à des touchers prédéterminés et d'en déduire une localisation éventuelle d'un toucher simple ou multiple. Les procédés mis en oeuvre dans les documents précités FR 2 916 545 et FR 2 948 471 sont applicables. En particulier, les ondes émises par les transducteurs E1 et E2 peuvent prendre la forme de trains d'ondes acoustiques constitués de plusieurs fréquences préétablies, par exemple comprises entre 35 kHz et 96 kHz, pour la formation d'une figure d'illumination ou de rayonnement dans un large spectre.

On obtient ainsi, pour chaque toucher simple ou multiple sur la plaque tactile 24, à l'aide d'un ou plusieurs doigts ou d'un stylet, une localisation de ce toucher simple ou multiple qui peut par exemple être visualisée sur l'écran du micro-ordinateur 12. Par extension, pour une succession de touchers simples ou multiples détectés sur la plaque tactile 24, formant un tracé simple ou multiple 26, une localisation de ce tracé 26 peut être visualisée sur l'écran du micro-ordinateur 12, sous la forme d'une courbe cinématique 28 obtenue par interpolation du tracé 26 détecté.

Selon un autre mode de réalisation de l'invention illustré sur la figure 2, la plaque tactile 24 peut être transparente et intégrée avec l'unité centrale électronique de commande dans un système électronique embarqué 30, tel qu'un téléphone mobile, un assistant numérique personnel ou tout autre dispositif portable ou embarqué tel qu'une interface homme-machine tactile embarquée dans un véhicule automobile. Dans ce cas, elle peut également de façon optionnelle remplir la fonction d'écran de visualisation de la courbe cinématique 28 obtenue par interpolation du tracé 26 détecté.

Il a été cependant constaté que les caractéristiques spectrales du signal de réception sont très sensibles à la température de la plaque tactile 24 ce qui peut rapidement rendre inopérantes les caractéristiques spectrales de référence apprises préalablement dès que l'on s'écarte de la température de référence de la plaque tactile à l'étape de calibrage. En pratique, un écart de seulement 1°C avec la température de référence suffit à dégrader fortement la reconnaissance de la localisation du toucher détecté.

D'une façon générale, un premier effet des variations de température concerne l'amplitude moyenne du spectre du signal de réception. Celle-ci varie avec la température. En particulier, en choisissant de bonnes dispositions relatives entre les transducteurs piézoélectriques E1, E2 et R, la variation de la norme du spectre du signal de réception dans une bande de fréquences prédéterminée (par exemple la bande de fréquences [35 kHz, 96 kHz]) peut être en relation monotone croissante ou décroissante avec la variation de température. Une relation bijective peut alors être établie entre la norme du spectre du signal de réception et la température de la plaque tactile 24. Un apprentissage peut ainsi permettre de se servir de cette relation bijective pour mesurer la température de la plaque tactile 24 en calculant la norme du spectre du signal de réception.

D'une façon générale également, un second effet des variations de température concerne les fréquences des caractéristiques spectrales. Un décalage de ces fréquences peut être observé lorsque la température varie. Lorsque les caractéristiques spectrales exploitées sont les amplitudes spectrales du signal de réception, cela se traduit par un décalage, pas nécessairement uniforme, du spectre. Un apprentissage peut alors permettre d'établir une correspondance, pour un ensemble de températures prédéterminées, entre plusieurs fréquences ou bandes de fréquences successives et plusieurs valeurs de décalage fréquentiel associées respectivement à ces fréquences ou bandes de fréquences successives. Cet apprentissage permet ainsi de corriger par décalage fréquentiel les caractéristiques spectrales du signal de réception ou les caractéristiques spectrales de référence avant de procéder aux comparaisons. De préférence, ce sont les caractéristiques spectrales du signal de réception qui sont corrigées avant d'être comparées aux caractéristiques spectrales de références, ces dernières étant enregistrées en mémoire.

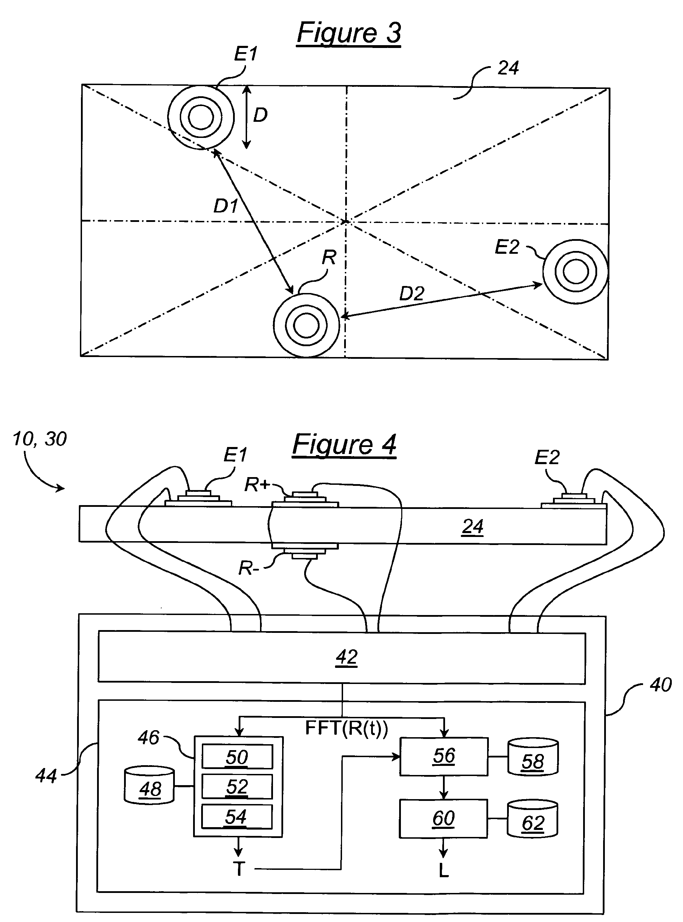

Comme représenté sur la figure 3, les transducteurs piézoélectriques E1, E2 et R sont disposés contre la plaque tactile 24, sur ses bords mais de préférence en dehors de ses axes de symétries (représentés en traits interrompus mixtes). La disposition relative de ces transducteurs et l'excitation des émetteurs sont par ailleurs judicieusement choisies pour assurer la monotonie, croissante ou décroissante, de la relation entre la norme du spectre du signal de réception capté par le transducteur R et la température de la plaque tactile 24. Ceci est par exemple obtenu simplement en excitant les transducteurs E1 et E2 en opposition de phase et en les disposant avec un différentiel de distance |D2-D1| inférieur ou égal à D/2 par rapport au récepteur R, où D est une demi-longueur d'onde caractéristique dans le matériau de la plaque tactile 24 correspondant par ailleurs au diamètre des transducteurs E1, E2 et R, où D1 est la distance entre E1 et R et D2 la distance entre E2 et R. Dans cette configuration, les interférences vues par le récepteur R sont en effet majoritairement destructrices.

La relation monotone peut également être obtenue sans contraintes sur |D2-D1| en excitant indépendamment les transducteurs E1 et E2 mais en ajustant un retard dans ces excitations. Le retard ou déphasage entre les transducteurs E1 et E2 optimisant la variation monotone de la norme du spectre du signal de réception en fonction de la température de la plaque tactile 24 vaut 3λ/4, où λ est la longueur d'onde associée à la fréquence de travail de ces transducteurs. Lorsque la température baisse, le différentiel de temps de transit entre les deux transducteurs émetteurs E1 et E2 diminue et le déphasage tend alors vers λ/2. La conséquence est que le signal diminue, tandis que lorsque la température augmente, le déphasage tend vers λ et le signal augmente. On sait d'ailleurs que sur une plage de températures comprises entre 0°C et 70°C, la variation de vitesse peut atteindre 20% et que donc le différentiel de temps de transit entre les émetteurs peut varier de 25% : en d'autres termes, pour une vitesse variant entre 0,8.V et V, le différentiel de temps de transit varie entre (D1-D2)/V et (D1-D2)/(0,8.V). Pour être sûr que le différentiel de temps soit toujours plus petit qu'un quart de période quelle que soit la fréquence de travail, on peut imposer que le différentiel de chemin entre E1 et E2 au récepteur R soit toujours plus petit que le quart de la longueur d'onde la plus petite. Cette contrainte est forte car la variation de la norme du spectre du signal de réception dépend de toutes les longueurs d'ondes engendrées, courtes comme longues. Selon le matériau utilisé, cela donne une valeur limite basse du différentiel de chemin maximal entre E1 et E2 à 1 mm pour les plastiques et à 5 mm pour le verre. Une valeur limite haute du différentiel de chemin maximal entre E1 et E2 est par exemple estimée pour une variation de vitesse de 10% et une longueur d'onde médiane correspondant à une fréquence de 70kHz. On obtient alors une valeur limite haute de 2 à 3 mm pour les plastiques et de 12 à 13 mm pour le verre et les métaux.

La plaque tactile 24 est représentée en vue latérale sur la figure 4. Elle est raccordée à une unité centrale électronique de commande 40 comportant :
- un microcontrôleur 42 d'émission/réception des ondes acoustiques de volume, plus précisément raccordé électriquement aux transducteurs piézoélectriques E1, E2 et R, et
- un module de traitement 44 programmé pour traiter numériquement les signaux de réception fournis par le microcontrôleur d'émission/réception 42 pour détecter et localiser des touchers simples ou multiples sur la plaque tactile 24.

Le microcontrôleur d'émission/réception 42 est doté d'une unité arithmétique et logique, éventuellement pilotée par le micro-ordinateur 12 dans le cas du dispositif 10. Il comporte une sortie reliée à un convertisseur numérique/analogique dont la sortie est reliée, si nécessaire via des amplificateurs, aux transducteurs d'émission E1 et E2. Par ailleurs, le transducteur de réception R est relié à un convertisseur analogique/numérique lui-même relié au ou partie intégrante du microcontrôleur d'émission/réception 42. Ce convertisseur analogique/numérique et le microcontrôleur d'émission/réception 42 sont aptes à effectuer un échantillonnage des signaux captés sur au moins 8 bits, préférentiellement sur 10 bits, voire sur 12 bits ou plus à une cadence d'au moins 192 kHz.

Selon une variante de réalisation, ou plus particulièrement dans le cas d'un banc de test, les convertisseurs analogique/numérique et numérique/analogique peuvent être remplacés par une carte d'acquisition et un générateur de fonctions arbitraires.

Les liaisons électriques vers les transducteurs E1, E2 et R peuvent être constituées notamment de câbles coaxiaux de type audio ou de toute autre liaison blindée. Cette condition est plus forte pour le transducteur de réception R dont on regarde les petites perturbations que pour les deux transducteurs d'émission E1 et E2.

Dans l'exemple illustré sur la figure 4, il convient de noter par ailleurs que le transducteur de réception R est en fait constitué de deux transducteurs R+ et R-disposés en vis-à-vis de part et d'autre de la plaque tactile 24. Ce montage en réception n'est pas indispensable mais est avantageusement mis en oeuvre pour permettre une réception sélective des ondes acoustiques de volume après leurs propagation et interférences dans la plaque tactile 24. En particulier, il vise à extraire un signal de réception R(t) qui ne dépendent essentiellement que du mode fondamental antisymétrique Ao de propagation des ondes de Lamb. D'une façon générale, les fréquences utilisées en émission ne dépassant pas les 100 kHz, les ondes acoustiques de volume se propagent dans une plaque mince sous la forme d'ondes Lamb suivant trois modes : le mode symétrique (S), le mode antisymétrique (A) et le mode transverse horizontale (TH), chacun de ces modes comportant une composante fondamentale et des harmoniques. Or, dans chacun de ces modes, les ondes se propagent à des vitesses différentes et ces vitesses varient différemment en fonction de la température et du matériau. Ainsi, toute variation de température engendre, outre une variation de la norme du spectre et un décalage de fréquences, une distorsion spectrale du signal de réception si celui-ci comporte plusieurs modes de propagation. Sachant en outre que c'est essentiellement le mode fondamental antisymétrique Ao qui réagit à un toucher simple ou multiple sur la plaque tactile 24, il est avantageux de filtrer (c'est-à-dire rejeter ou discriminer) les autres modes pour éviter ces distorsions.

La réception sélective du mode fondamental antisymétrique A₀ de propagation des ondes de Lamb à l'aide des deux transducteurs R+ et R- disposés en vis-à-vis peut s'envisager concrètement de différentes façons :
- les deux transducteurs R+ et R- sont disposés de manière à présenter des polarisations orientées antisymétriquement par rapport au plan médian de la plaque tactile 24 et sont connectés électriquement en parallèle entre eux,
- les deux transducteurs R+ et R- sont disposés de manière à présenter des polarisations orientées symétriquement par rapport au plan médian de la plaque tactile 24 et sont connectés électriquement en antiparallèle entre eux,
- les deux transducteurs R+ et R- sont disposés de manière à présenter des polarisations orientées symétriquement par rapport au plan médian de la plaque tactile 24 et sont connectés électriquement en série entre eux (montage illustré sur la figure 4, nécessitant moins de câbles de connexion que les deux précédents et simple à réaliser lorsque les transducteurs PZT peuvent être connectés par leurs disques en laiton).

Ces trois types de montage ne sont efficaces que si la plaque tactile est d'épaisseur relativement homogène et isotrope.

En variante ou en complément de la réception sélective du mode fondamental antisymétrique A₀ de propagation des ondes de Lamb à l'aide des deux transducteurs R+ et R- disposés en vis-à-vis, il pourrait être également envisagé une émission sélective de ce mode fondamental antisymétrique à l'aide de paires de transducteurs d'émission (E1+ et E1-, E2+ et E2-) disposées en vis-à-vis. Mais en pratique, cette variante ou ce complément n'est pas très avantageux puisque cela induit une forte augmentation de la capacité statique des transducteurs émetteurs et donc de la consommation en courant électrique.

Le signal de réception R(t) numérisé par le microcontrôleur d'émission/réception 42 peut être transformé par FFT (de l'anglais « Fast Fourier Transform ») avant d'être transmis au module de traitement 44. C'est alors le spectre du signal de réception R(t), noté FFT(R(t)), qui est reçu et traité par le module 44.

Le module de traitement 44 peut comporter de façon optionnelle un module 46 de mesure de la température de la plaque tactile 24 à partir des variations de la norme euclidienne du spectre du signal de réception FFT(R(t)) à vide. Par signal de réception à vide, on entend le signal de réception transmis par le microcontrôleur d'émission/réception 42 lorsqu'aucun toucher simple ou multiple n'est détecté. Un apprentissage préalable, comme mentionné précédemment, permet d'établir une relation bijective entre différentes valeurs de température de la plaque tactile 24 et différentes valeurs de la norme euclidienne du signal de réception FFT(R(t)) à vide. Cette relation est sauvegardée dans une zone de mémoire 48 à laquelle le module de mesure 46 a accès en lecture.

Le module de mesure 46 comporte alors :
- un calculateur 50 de valeur moyenne de norme, par exemple euclidienne, du spectre du signal de réception dans une bande de fréquences prédéterminée et dans une fenêtre temporelle prédéterminée,
- un comparateur 52 de cette norme calculée, notée ∥FFT(R(t))∥, à un ensemble de normes de référence associées respectivement à un ensemble de températures dans la zone de mémoire 48,
- un sélecteur 54 de température T en fonction du résultat fourni par le comparateur 52.

En variante et selon le même principe de relation bijective entre variations de température et variations spectrales, le module de mesure 46 pourrait exploiter l'effet des variations de température sur le décalage des fréquences du signal de réception à vide. Ainsi, selon une première variante, une méthode exploitée par le module de mesure 46 pourrait être de calculer le barycentre fréquentiel du spectre FFT(R(t)) à vide dans une bande de fréquences prédéterminée, la position spectrale de ce barycentre étant bijectivement associée à une température selon un apprentissage similaire à celui mentionné précédemment. Selon une autre variante, le module de mesure 46 pourrait calculer la position d'un extremum local du spectre FFT(R(t)) à vide, cet extremum correspondant à une fréquence de résonance particulière du milieu de propagation que constitue la plaque tactile 24. Dans ce cas, il peut même être procédé à un balayage fréquentiel spécifique autour de cette fréquence de résonance, par exemple entre 39 kHz et 41 kHz si la résonance se situe à 40 kHz. Un calcul de FFT à haute résolution dans cette gamme spécifique permet alors une détection précise de la position de l'extremum local, faisant éventuellement intervenir une interpolation quadratique de la FFT autour de l'extremum. De même que pour le barycentre fréquentiel et pour la norme euclidienne, un décalage fréquentiel de l'extremum local traduit une variation de température. Le décalage fréquentiel de l'extremum local peut par ailleurs être constaté sans passer par un calcul de FFT mais par une simple mesure d'amplitude crête du signal de réception R(t) en une dizaine de fréquences prédéfinies autour de la position approximative de l'extremum puis par interpolation quadratique. Ce calcul est plus simple et plus rapide qu'un calcul de FFT. Il peut également être appliqué pour le calcul du barycentre fréquentiel uniquement sur une dizaine de fréquences prédéfinies.

En variante également, on pourrait se passer du module de mesure 46 en le remplaçant par un capteur de température disposé au contact de la plaque tactile 24, par exemple une thermistance, et apte à fournir ses valeurs mesurées au module de traitement 44.

Le module de traitement 44 comporte un module 56 d'adaptation du spectre FFT(R(t)) du signal de réception par décalage de ses composantes en fonction de la température mesurée T. Il fournit un spectre corrigé FFT'(R(t)) du signal de réception. Un apprentissage préalable, comme mentionné précédemment, permet d'établir, par exemple pour chaque valeur de température mesurable par le module 46, une correspondance entre les fréquences successives du spectre FFT(R(t)) à vide et des valeurs de décalage fréquentiel à appliquer pour se recaler sur une température de référence. D'une façon plus générale, la correspondance peut être établie, pour un ensemble de températures prédéterminées, entre plusieurs fréquences ou bandes de fréquences successives et plusieurs valeurs de décalage fréquentiel associées respectivement à ces fréquences ou bandes de fréquences successives. Cette correspondance préétablie est sauvegardée dans une zone de mémoire 58 à laquelle le module d'adaptation 56 a accès en lecture. Elle est apprise sur des signaux de réception à vide parce qu'il a été constaté que le décalage fréquentiel en fonction de la température est peu dépendant du fait qu'un toucher simple ou multiple soit détecté ou pas.

Enfin, le module de traitement 44 comporte un module 60 de localisation L d'au moins un toucher sur la plaque tactile 24 par comparaison de certaines caractéristiques spectrales du signal de réception, en l'occurrence son spectre corrigé FFT'(R(t)) sur une bande de fréquences prédéterminées, à un ensemble de caractéristiques spectrales de références, stockées dans une zone de mémoire 60 à laquelle le module de localisation 60 a accès en lecture. Ces caractéristiques spectrales de référence sont relatives à différentes localisations de touchers simples ou multiples apprises préalablement à la température de référence précitée. En variante, ce sont les caractéristiques spectrales de référence qui pourraient être corrigées avant d'être comparées aux caractéristiques spectrales du signal de réception, mais il est clair qu'il est plus simple en pratique de corriger celles du signal de réception.

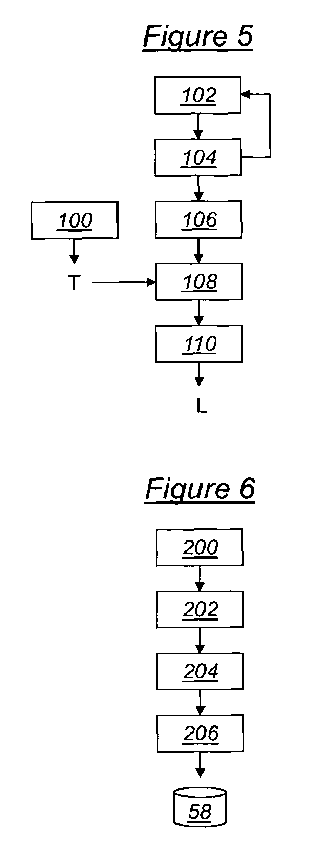

Un procédé de détection et de localisation de touchers simples ou multiples mis en oeuvre par le système 10 ou 30 précédemment décrit va maintenant être détaillé en référence à la figure 5.

Au cours d'une étape de mesure 100, répétée régulièrement et parallèlement aux autres étapes de ce procédé, la température T de la plaque tactile 24 est mesurée par le module de mesure 46 du système de détection et de localisation 10 ou 30.

Au cours d'une étape 102, des ondes acoustiques de volume sont émises dans la plaque tactile 24 par les transducteurs d'émission E1 et E2 sur commande du microcontrôleur d'émission/réception 42.

Au cours d'une étape 104, les ondes acoustiques émises sont reçues par le transducteur de réception R après s'être propagées dans la plaque tactile 24 et avoir interféré entre elles. Le microcontrôleur d'émission/réception 42 traite le signal analogique renvoyé par le transducteur R pour fournir un signal de réception numérisé et transformé par FFT. Le spectre FFT(R(t)) résultant est transmis au module de traitement 44.

Les étapes 102 et 104 sont répétées en boucles.

Au cours d'une étape 106 exécutée suite à l'une des instances de l'étape répétée 104, un toucher simple ou multiple est détecté. Cette détection peut résulter d'une variation brusque de certaines caractéristiques du signal de réception ou de son spectre (atténuation, distorsion du spectre par rapport à un spectre de référence à vide, ...).

Au cours d'une étape d'adaptation 108, en fonction de la température mesurée T et des paramètres de décalage fréquentiel stockés dans la zone de mémoire 58, le spectre FFT(R(t)) est adapté par le module 56 pour être recalé sur la forme qu'il aurait dû prendre à la température de référence. A l'issue de cette étape, le spectre corrigé FFT'(R(t)) est transmis au module de localisation 60.

Enfin, au cours d'une étape de localisation 110, le module 60 compare le spectre corrigé FFT'(R(t)) à des spectres de référence qui ont été préalablement appris pour une pluralité de touchers simples ou multiples donnés à la température de référence. Il en déduit selon un procédé connu des documents précités FR 2 916 545 et FR 2 948 471 la ou les localisation(s) L du toucher détecté.

La phase d'apprentissage permettant d'alimenter la zone de mémoire 58 en paramètres de décalage fréquentiel à appliquer à chaque température mesurée va maintenant être détaillée en référence à la figure 6.

Conformément à une première étape 200 de cette phase d'apprentissage, des spectres à vides sont obtenus à différentes températures (autant que souhaité et nécessaire pour assurer une bonne tenue en température du système de détection et de localisation dans toute la plage de températures apprises) et comparés au spectre à vide obtenu à la température de référence, dit spectre de référence. Pour effectuer cette comparaison, des points d'intérêts des spectres à vide sont identifiés. Il s'agit par exemple des sommets et des creux que l'on retrouve aisément dans chaque spectre à vide.

Au cours d'une étape suivante 202, pour chaque température concernée par cette phase d'apprentissage, les points d'intérêt du spectre à vide correspondant sont appariés respectivement aux mêmes points d'intérêt du spectre de référence. On en déduit alors le décalage fréquentiel à réaliser pour passer de chaque point d'intérêt du spectre à vide correspondant à la température concernée à son homologue dans le spectre de référence.

Ensuite, au cours d'une étape 204, par interpolation linéaire entre chacun des points d'intérêts on en déduit des valeurs de paramètres de décalage pour chaque fréquence de la bande spectrale d'intérêt.

Enfin, au cours d'une dernière étape 206, il reste éventuellement à inverser le sens de décalage et à enregistrer les paramètres de décalage résultants dans la zone de mémoire 58. Ces paramètres permettent ensuite de corriger tout spectre FFT(R(t)) obtenu à une température T pour qu'il soit conforme à ce qu'il aurait dû être à la température de référence, c'est-à-dire la température à laquelle ont été effectués les apprentissages de touchers simples ou multiples exploités par le module de localisation 60 à l'étape 110.

Cette adaptation du spectre FFT(R(t)) en fonction de la température mesurée permet d'améliorer de façon très importante la tenue en température du système de détection et de localisation. Expérimentalement, il a été montré qu'une tenue en température de plus de 20°C peut ainsi être obtenue sur la base d'un seul jeu de caractéristiques spectrales de référence apprises à une seule température de référence. Ainsi, pour un apprentissage réalisé à 20°C, la tenue en température s'avère satisfaisante entre 10°C et 30°C.

Par ailleurs, pour conforter cette amélioration des performances du système, d'autres améliorations peuvent être plus généralement apportées.

Ainsi, pour que l'adaptation du spectre FFT(R(t)) fonctionne, il faut que la résolution spectrale de l'électronique de mesure, typiquement de 100 Hz, soit suffisante par rapport aux fluctuations du spectre de la plaque tactile exploitée. Autrement dit, il faut que la plaque soit faiblement réverbérante pour qu'elle ne présente pas de pics de résonance trop sélectifs. En pratique, les ondes acoustiques sont assez efficacement amorties dans des plaques ou coques en plastiques, mais beaucoup plus faiblement amorties dans les plaques en verre ou en métal, surtout si l'objet à surface tactile présente une symétrie élevée comme c'est par exemple le cas des exemples illustrés sur les figures 1 à 4. Dans de tels cas, il est avantageux d'ajouter une mousse amortissante à la surface de la plaque tactile (par exemple une mousse en polyuréthane, alvéolée en PVC de densité moyenne à forte). On peut aussi recouvrir ou tremper une face de la plaque tactile dans un bain de silicone pour former une couche de silicone pouvant atteindre une épaisseur de 0,5 mm à 2 mm. La couche amortissante peut être limitée à la périphérie de la plaque ou coque tactile.

Ainsi également, compte tenu du décalage observé des fréquences en fonction des variations de la température de la plaque tactile 24, pour que le recalage des perturbations tactiles selon l'adaptation proposée fonctionne avec de bonnes performances, il est avantageux que le spectre d'excitation des transducteurs d'émission E1 et E2 soit le plus plat possible dans la bande spectrale d'intérêt. On émet donc un train d'ondes de spectre carré dans une bande de fréquences dont les limites basse et haute excluent l'harmonique 3. On choisit alors une limite basse supérieure au tiers de la limite haute. On constate en outre que plus le spectre est élevé ou plus la plaque est mince, meilleure est la résolution du procédé proposé. Pour une épaisseur de plaque donnée, on peut alors définir un seuil au-dessus duquel les fréquences ne sont plus prises en compte dans le calcul de la détection et localisation de touchers car la localisation serait trop discriminante spatialement.

Aux fréquences basses, c'est le seuil d'audition qui impose la limite, celles-ci pouvant pénétrer dans le domaine audible si l'amplitude d'excitation des transducteurs E1 et E2 est fortement réduite et si R(t) subit une plus forte amplification. C'est pourquoi la bande de fréquences précédemment mentionnée de [35 kHz, 96 kHz] est pertinente pour de nombreux matériaux dont l'épaisseur se situe entre 1 mm et 6 mm. Par ailleurs, afin de limiter les ondulations sur le spectre, on choisit le nombre optimal de fréquences à générer pour produire un gabarit le plus plat possible. Dans l'exemple de la bande de fréquences de [35 kHz, 96 kHz], l'optimum se situe autour d'une émission de soixante fréquences. On notera que l'on entend concrètement par « émission de fréquence » l'émission d'une impulsion de type sinus cardinal centrée autour de la fréquence considérée.

De plus, pour aplatir le spectre d'émission au maximum, on peut avoir recours à une technique originale d'excitation par balayage fréquentiel pour s'affranchir d'avantage du bruit inclus dans le spectre. Celle-ci a pour but d'exciter la plaque tactile 24 avec des fréquences variant cycliquement dans le temps et de moyenner le résultat obtenu. Ainsi, pour un spectre généré par l'émission de trains d'ondes à N fréquences allant de Fmin (par exemple 35 kHz) à Fmax (par exemple 96 kHz), l'écart entre deux fréquences et donc deux lobes consécutifs du spectre étant d'environ Δf = (Fmax - Fmin)/N, en générant P fois le même train d'ondes mais décalé, à chaque fois, d'une fraction Δf/P de cet écart, puis en divisant par P, on obtient l'équivalent d'une excitation sans lobe. Le prix à payer est le nombre P de trains d'ondes qu'il faut émettre successivement pour ne récupérer au final qu'un seul spectre. Il faut donc faire un compromis entre la précision nécessaire du spectre et le temps de calcul. On peut choisir par exemple de ne faire que P = 2 émissions de trains d'ondes pour aplatir le spectre tout en conservant un temps de calcul acceptable.

Enfin, après les avoir identifiées par une méthode classique, on peut également prendre en considération les fonctions de transfert des transducteurs E1, E2 et R de façon à les compenser dans l'émission des trains d'ondes et dans la réception des signaux. Pour ce faire, on peut jouer sur l'amplitude du signal envoyé ou sur la durée d'envoi de chacune des fréquences.

Il apparaît clairement qu'un système de détection et de localisation de touchers simple ou multiples tel que celui décrit précédemment permet d'assurer une bonne tenue en température malgré un apprentissage des touchers susceptibles d'être localisés réalisé à une seule température de référence.

On notera par ailleurs que l'invention n'est pas limitée aux modes de réalisation décrits précédemment.

En particulier, la plaque tactile 24 illustrée et détaillée en référence aux deux exemples des figures 1 et 2 peut être remplacée par toute coque tactile de forme quelconque, y compris tridimensionnelle.

Il apparaîtra plus généralement à l'homme de l'art que diverses modifications peuvent être apportées aux modes de réalisation décrits ci-dessus, à la lumière de l'enseignement qui vient de lui être divulgué. Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

## Revendications

1. Système (10, 30) de détection et de localisation d'au moins un toucher sur une surface tactile (24) d'un objet, comportant :
- au moins deux sources distinctes (E1, E2) d'émission d'ondes acoustiques de volume dans la surface tactile, disposées de manière à engendrer des interférences acoustiques entre les ondes émises,
- au moins un récepteur (R ; R+, R-) des ondes acoustiques de volume après leur propagation et leur interférence dans la surface tactile, conçu pour fournir un signal de réception à partir des ondes acoustiques reçues,
- des moyens (60) de localisation d'au moins un toucher sur la surface tactile (24) de l'objet par comparaison de certaines caractéristiques spectrales du signal de réception (FFT(R(t))) à un ensemble de caractéristiques spectrales de référence (62),
**caractérisé en ce qu'**il comporte en outre :
- des moyens (46) de mesure d'une température de la surface tactile (24), et
- des moyens (56) d'adaptation des caractéristiques spectrales du signal de réception (FFT(R(t))) ou des caractéristiques spectrales de référence (62) par décalage fréquentiel d'au moins une partie de ces caractéristiques spectrales en fonction de la température mesurée (T).

2. Système (10, 30) de détection et de localisation d'au moins un toucher selon la revendication 1, dans lequel les moyens d'adaptation (56) sont conçus pour décaler chaque caractéristique spectrale du signal de réception (FFT(R(t))) en fonction de la température mesurée (T), à partir d'une correspondance préétablie et enregistrée en mémoire (58), pour un ensemble de températures prédéterminées, entre plusieurs fréquences ou bandes de fréquences successives et plusieurs valeurs de décalage fréquentiel associées respectivement à ces fréquences ou bandes de fréquences successives.

3. Système (10, 30) de détection et de localisation d'au moins un toucher selon la revendication 1 ou 2, dans lequel les moyens (46) de mesure de température (T) comportent :
- un calculateur (50) de norme du spectre du signal de réception (FFT(R(t))) dans une bande de fréquences prédéterminée,
- un comparateur (52) de cette norme calculée à un ensemble de normes de référence (48) associées respectivement à un ensemble de températures,
- un sélecteur (54) de température (T) en fonction du résultat fourni par le comparateur (52).

4. Système (10, 30) de détection et de localisation d'au moins un toucher selon la revendication 3, dans lequel les sources d'émission (E1, E2) et le récepteur (R ; R+, R-) sont disposés de manière asymétrique en périphérie de la surface tactile (24) et l'excitation des sources d'émission est établie de manière que la relation entre l'ensemble de normes de référence et l'ensemble de températures soit une relation monotone croissante ou décroissante.

5. Système (10, 30) de détection et de localisation d'au moins un toucher selon la revendication 1 ou 2, dans lequel les moyens de mesure de température comportent un capteur de température, notamment une thermistance, disposé au contact de la surface tactile (24).

6. Système (10, 30) de détection et de localisation d'au moins un toucher selon l'une quelconque des revendications 1 à 5, dans lequel, les ondes acoustiques de volume se propageant dans la surface tactile sous forme d'ondes de Lamb, deux récepteurs (R+, R-) sont disposés en vis-à-vis contre la surface tactile (24), ces récepteurs étant polarisés et connectés entre eux de manière à ne recevoir essentiellement que le mode fondamental antisymétrique de propagation des ondes de Lamb et à rejeter les ondes symétriques et les ondes transverses horizontales.

7. Système (10, 30) de détection et de localisation d'au moins un toucher selon la revendication 6, dans lequel les deux récepteurs (R+, R-) sont disposés de manière à présenter des polarisations orientées symétriquement par rapport au plan médian de la surface tactile (24) et sont connectés électriquement en série entre eux.

8. Procédé de détection et de localisation d'au moins un toucher sur une surface tactile (24) d'un objet, comportant :
- l'émission (102) dans la surface tactile (24), par au moins deux sources distinctes (E1, E2), d'ondes acoustiques de volume interférant entre elles,
- la réception (104), par au moins un récepteur (R ; R+, R-), des ondes acoustiques de volume après leur propagation et leur interférence dans la surface tactile (24), et la fourniture d'un signal de réception à partir des ondes acoustiques reçues,
- la localisation (110) d'au moins un toucher sur la surface tactile (24) de l'objet par comparaison de certaines caractéristiques spectrales du signal de réception (FFT(R(t))) à un ensemble de caractéristiques spectrales de référence (62) enregistrées en mémoire,
**caractérisé en ce qu'**il comporte en outre :
- la mesure (100) d'une température de la surface tactile (24), et
- l'adaptation (108) des caractéristiques spectrales du signal de réception (FFT(R(t))) ou des caractéristiques spectrales de référence (62) par décalage fréquentiel d'au moins une partie de ces caractéristiques spectrales en fonction de la température mesurée (T).

9. Procédé de détection et de localisation d'au moins un toucher selon la revendication 8, dans lequel :
- chaque caractéristique spectrale du signal de réception (FFT(R(t))) est décalée en fonction de la température mesurée (T), à partir d'une correspondance préétablie (58), pour un ensemble de températures prédéterminées, entre plusieurs fréquences ou bandes de fréquences successives et plusieurs valeurs de décalage fréquentiel associées respectivement à ces fréquences ou bandes de fréquences successives, et
- ces valeurs de décalage fréquentiel sont apprises lors d'une phase préalable d'apprentissage (200, 202, 204, 206) par appariement (202) de caractéristiques spectrales extraites à vide à différentes températures avec des caractéristiques spectrales extraites à vide à la température d'apprentissage des caractéristiques spectrales de référence.

10. Procédé de détection et de localisation d'au moins un toucher selon la revendication 8 ou 9, dans lequel l'émission (102) des ondes acoustiques de volume se fait sous la forme d'émissions successives de trains d'ondes impulsionnelles à différentes fréquences entre une fréquence minimale et une fréquence maximale commune aux trains d'ondes, et dans lequel :
- la fréquence minimale est supérieure au tiers de la fréquence maximale,
- chaque train d'ondes à partir du deuxième diffère du précédent par un décalage fréquentiel de ses ondes impulsionnelles d'une fraction de l'écart fréquentiel moyen entre les ondes impulsionnelles.

## Patentansprüche

1. System (10, 30) zum Erfassen und zum Lokalisieren mindestens einer Berührung auf einer berührungsempfindlichen Oberfläche (24) eines Objekts, umfassend:
- mindestens zwei verschiedene Quellen (E1, E2) zur Emission von akustischen Volumenwellen auf der berührungsempfindlichen Oberfläche, die angeordnet sind, um akustische Interferenzen zwischen den emittierten Wellen zu erzeugen,
- mindestens einen Empfänger (R; R+, R-) der akustischen Volumenwellen nach ihrer Verbreitung und ihrer Interferenz in der berührungsempfindlichen Oberfläche, der entworfen ist, um ein Empfangssignal auf der Grundlage der empfangenen akustischen Wellen zu liefern,
- Mittel (60) zum Lokalisieren von mindestens einer Berührung auf der berührungsempfindlichen Oberfläche (24) des Objekts durch den Vergleich von bestimmten spektralen Eigenschaften des Empfangssignals (FFT(R(t))) mit einer Einheit von spektralen Referenzeigenschaften (62),
**dadurch gekennzeichnet, dass** es außerdem Folgendes umfasst:
- Mittel (46) zum Messen einer Temperatur der berührungsempfindlichen Oberfläche (24), und
- Mittel (56) zum Anpassen der spektralen Eigenschaften des Empfangssignals (FFT(R(t))) oder der spektralen Referenzeigenschaften (62) durch Frequenzverschiebung von mindestens einem Teil dieser spektralen Eigenschaften je nach der gemessenen Temperatur (T).

2. System (10, 30) zum Erfassen und zum Lokalisieren von mindestens einer Berührung nach Anspruch 1, wobei die Mittel zum Anpassen (56) entworfen sind, um jede spektrale Eigenschaft des Empfangssignals (FFT(R(t))) je nach der gemessenen Temperatur (T) auf der Grundlage einer im Speicher (58) vorbestimmten und registrierten Übereinstimmung für eine Einheit von vorbestimmten Temperaturen zwischen mehreren aufeinander folgenden Frequenzen oder Frequenzbändern und mehreren Werten der Frequenzverschiebung zu verschieben, die jeweils mit diesen aufeinander folgenden Frequenzen oder Frequenzbändern assoziiert sind.

3. System (10, 30) zum Erfassen und zum Lokalisieren von mindestens einer Berührung nach Anspruch 1 oder 2, wobei die Mittel (46) zum Messen der Temperatur (T) Folgendes umfassen:
- eine Vorrichtung zum Berechnen (50) der Norm des Spektrums des Empfangssignals (FFT(R(t))) in einem vorbestimmten Frequenzband,
- eine Vorrichtung zum Vergleichen (52) dieser berechneten Norm mit einer Einheit von Referenznormen (48), die jeweils mit einer Einheit von Temperaturen assoziiert sind,
- eine Vorrichtung zum Auswählen (54) der Temperatur (T) je nach dem Ergebnis, das von der Vorrichtung zum Vergleichen (52) geliefert wird.

4. System (10, 30) zum Erfassen und zum Lokalisieren von mindestens einer Berührung nach Anspruch 3, wobei die Emissionsquellen (E1, E2) und der Empfänger (R; R+, R-) auf asymmetrische Weise am Umfang der berührungsempfindlichen Oberfläche (24) angeordnet sind und die Erregung der Emissionsquellen derart festgelegt ist, dass die Beziehung zwischen der Einheit der Referenznormen und der Einheit der Temperaturen eine auf- oder absteigende monotone Beziehung ist.

5. System (10, 30) zum Erfassen und zum Lokalisieren von mindestens einer Berührung nach Anspruch 1 oder 2, wobei die Mittel zum Messen der Temperatur einen Temperatursensor umfassen, insbesondere einen Thermistor, der in Kontakt mit der berührungsempfindlichen Oberfläche (24) angeordnet ist.

6. System (10, 30) zum Erfassen und zum Lokalisieren von mindestens einer Berührung nach einem der Ansprüche 1 bis 5, wobei, da sich die akustischen Volumenwellen auf der berührungsempfindlichen Oberfläche in Form von Lamb-Wellen verbreiten, zwei Empfänger (R+, R-) einander gegenüber liegend gegen die berührungsempfindliche Oberfläche (24) angeordnet sind, wobei diese Empfänger untereinander derart polarisiert und verbunden sind, dass sie im Wesentlichen nur den grundlegenden asymmetrischen Modus zur Verbreitung der Lamb-Wellen empfangen und die symmetrischen Wellen und die horizontalen Querwellen zurückzuweisen.

7. System (10, 30) zum Erfassen und zum Lokalisieren von mindestens einer Berührung nach Anspruch 6, wobei die zwei Empfänger (R+ und R-) derart angeordnet sind, dass sie Polarisierungen aufweisen, die symmetrisch mit Bezug auf die mittlere Ebene der berührungsempfindlichen Oberfläche (24) ausgerichtet und elektrisch miteinander in Reihe verbunden sind.

8. Verfahren (10, 30) zum Erfassen und zum Lokalisieren mindestens einer Berührung auf einer berührungsempfindlichen Oberfläche (24) eines Objekts, umfassend:
- die Emission (102) auf der berührungsempfindlichen Oberfläche (24) durch mindestens zwei verschiedene Quellen (E1, E2) von akustischen Volumenwellen, die untereinander interferieren,
- den Empfang (104), durch mindestens einen Empfänger (R; R+, R-) der akustischen Volumenquellen nach ihrer Verbreitung und ihrer Interferenz in der berührungsempfindlichen Oberfläche (24), und der Lieferung eines Empfangssignals auf der Grundlage der empfangenen akustischen Wellen,
- die Lokalisierung (110) von mindestens einer Berührung auf der berührungsempfindlichen Oberfläche (24) des Objekts durch den Vergleich von bestimmten spektralen Eigenschaften des Empfangssignals (FFT(R(t))) mit einer Einheit von spektralen Referenzeigenschaften (62), die im Speicher registriert sind,
**dadurch gekennzeichnet, dass** es außerdem Folgendes umfasst:
- die Messung (100) einer Temperatur der berührungsempfindlichen Oberfläche (24), und
- die Anpassung (108) der spektralen Eigenschaften des Empfangssignals (FFT(R(t))) oder der spektralen Referenzeigenschaften (62) durch Frequenzverschiebung von mindestens einem Teil dieser spektralen Eigenschaften je nach der gemessenen Temperatur (T).

9. Verfahren (10, 30) zum Erfassen und zum Lokalisieren von mindestens einer Berührung nach Anspruch 8, wobei
- jede spektrale Eigenschaft des Empfangssignals (FFT(R(t))) je nach der gemessenen Temperatur (T) auf der Grundlage einer vorbestimmten Übereinstimmung (58) für eine Einheit von vorbestimmten Temperaturen zwischen mehreren aufeinander folgenden Frequenzen oder Frequenzbändern und mehreren Werten der Frequenzverschiebung verschoben wird, die jeweils mit diesen aufeinander folgenden Frequenzen oder Frequenzbändern assoziiert sind, und
- diese Werte der Frequenzverschiebung bei einer vorhergehenden Lernphase (200, 202, 204, 206) durch Paarung (202) von spektralen Eigenschaften erlernt werden, die unter Vakuum bei verschiedenen Temperaturen mit spektralen Eigenschaften extrahiert wurden, die unter Vakuum bei der Lerntemperatur der spektralen Referenzeigenschaften extrahiert wurden.

10. Verfahren zum Erfassen und zum Lokalisieren von mindestens einer Berührung nach Anspruch 8 oder 9, wobei die Emission (102) der akustischen Volumenwellen in der Form von aufeinander folgenden Emissionen von Impulswellenströmen mit verschiedenen Frequenzen zwischen einer minimalen Frequenz und einer maximalen gemeinsamen Frequenz der Wellenströme erfolgt, und wobei:
- die minimale Frequenz höher als ein Drittel der maximalen Frequenz ist,
- jeder Wellenstrom ab dem zweiten sich vom Vorhergehenden um eine Frequenzverschiebung seiner Impulswellen um eine Fraktion des mittleren Frequenzabstands zwischen den Impulswellen unterscheidet.

## Claims

1. System (10, 30) for detecting and localizing at least one touch on a touch-sensitive surface (24) of an object, comprising:
- at least two separate sources (E1, E2) for transmitting bulk acoustic waves in the touch-sensitive surface, arranged so as to generate acoustic interference between the transmitted waves,
- at least one bulk acoustic wave receiver (R; R+, R-) after the propagation and interference thereof in the touch-sensitive surface, designed to supply a reception signal on the basis of the acoustic waves received,
- means (60) for localizing at least one touch on the touch-sensitive surface (24) of the object by comparing certain spectral characteristics of the reception signal (FFT(R(t))) to a set of reference spectral characteristics (62),
**characterized in that** it further comprises:
- means (46) for measuring a temperature of the touch-sensitive surface (24), and
- means (56) for adapting the spectral characteristics of the reception signal (FFT(R(t))) or the reference spectral characteristics (62) by means of a frequency shift of at least some of these spectral characteristics as a function of the temperature (T) measured.

2. System (10, 30) for detecting and localizing at least one touch according to claim 1, wherein the adaptation means (56) are designed to shift each spectral characteristic of the reception signal (FFT(R(t))) according to the temperature (T) measured, on the basis of a predefined correspondence saved in memory (58), for a set of pre-determined temperatures, between a plurality of successive frequencies or frequency bands and a plurality of frequency shift values associated respectively with these successive frequencies or frequency bands.

3. System (10, 30) for detecting and localizing at least one touch according to claim 1 or 2, wherein the means (46) for measuring temperature (T) comprise:
- a calculator (50) for calculating a norm of the spectrum of the reception signal (FFT(R(t))) in a pre-determined frequency band,
- a comparator (52) of this calculated norm to a set of reference norms (48) associated respectively with a set of temperatures,
- a temperature (T) selector (54) on the basis of the result supplied by the comparator (52).

4. System (10, 30) for detecting and localizing at least one touch according to claim 3, wherein the transmission sources (E1, E2) and the receiver (R; R+, R-) are arranged asymmetrically on the periphery of the touch-sensitive surface (24) and the excitation of the transmission sources is established such that the relationship between the set of reference norms and the set of temperatures is an increasing or decreasing monotonic relationship.

5. System (10, 30) for detecting and localizing at least one touch according to claim 1 or 2, wherein the means for measuring temperature comprise a temperature sensor, particularly a thermistor, arranged in contact with the touch-sensitive surface (24).

6. System (10, 30) for detecting and localizing at least one touch according to any of claims 1 to 5, wherein the bulk acoustic waves being propagated in the touch-sensitive surface in the form of Lamb waves, two receivers (R+, R-) are arranged facing each other against the touch-sensitive surface (24), these receivers being polarized and interconnected so as to only receive essentially the fundamental anti-symmetric Lamb mode and reject symmetric waves and transverse horizontal waves.

7. System (10, 30) for detecting and localizing at least one touch according to claim 6, wherein the two receivers (R+, R-) are arranged so as to have symmetrically oriented polarizations relative to the median plane of the touch-sensitive surface (24) and are electrically connected together in series.

8. Method for detecting and localizing at least one touch on a touch-sensitive surface (24) of an object, comprising:
- transmission (102) in the touch-sensitive surface (24), by at least two separate sources (E1, E2), of mutually interfering bulk acoustic waves,
- reception (104), by at least one receiver (R; R+, R-), of bulk acoustic waves after the propagation and interference thereof in the touch-sensitive surface (24), and supply of a reception signal on the basis of the acoustic waves received,
- localization (110) of at least one touch on the touch-sensitive surface (24) of the object by comparing certain spectral characteristics of the reception signal (FFT(R(t))) to a set of reference spectral characteristics (62) saved in memory,
**characterized in that** it further comprises:
- measurement (100) of a temperature of the touch-sensitive surface (24), and
- adaptation (108) of the spectral characteristics of the reception signal (FFT(R(t))) or the reference spectral characteristics (62) by means of a frequency shift of at least some of these spectral characteristics as a function of the temperature (T) measured.

9. Method for detecting and localizing at least one touch according to claim 8, wherein:
- each spectral characteristic of the reception signal (FFT(R(t))) is shifted according to the temperature (T) measured, on the basis of a predefined correspondence (58), for a set of pre-determined temperatures, between a plurality of successive frequencies or frequency bands and a plurality of frequency shift values associated respectively with these successive frequencies or frequency bands, and
- these frequency shift values are learned during a prior learning phase (200, 202, 204, 206) by matching (202) spectral characteristics retrieved off-load at different temperatures with spectral characteristics retrieved off-load at the temperature for learning the reference spectral characteristics.

10. Method for detecting and localizing at least one touch according to claim 8 or 9, wherein the bulk acoustic waves are transmitted (102) in the form of successive pulse wavetrain transmissions at different frequencies between a minimum frequency and a maximum frequency common to the wavetrains, and wherein:
- the minimum frequency is greater than one-third of the maximum frequency,
- each wavetrain from the second differs from the previous one by a frequency shift of the pulse waves thereof by a fraction of the mean frequency deviation between the pulse waves.
